# EUROPEAN PATENT APPLICATION

(11) **EP 4 447 495 A1**
(43) Date of publication of application: **16.10.2024**
(21) Application number: 21966713.6
(22) Date of filing: 08.12.2021
(51) Int. Cl.: H04W 4/02

(54) **INFORMATION PROCESSING METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Stöckeler, Ferdinand
(86) International application number: PCT/CN2021/136585
(87) International publication number: WO 2023/102789

(57) **Abstract**

Provided in embodiments of the present disclosure are an information processing method and apparatus, a communication device, and a storage medium. The information processing method executed by an access network device may comprise: acquiring first indication information of UE, wherein the first indication information indicates whether the UE has the capability to perform positioning in a radio resource control (RRC) non-connected state.

## Description

### TECHNICAL FIELD

The disclosure relates to, but is not limited to, the field of wireless communication technology, in particular to methods and apparatuses for processing information, a communication device, and a storage medium.

### BACKGROUND

When performing positioning using a User Equipment (UE), the UE may exchange positioning requests and positioning data with a network side (e.g., a Location Management Function (LMF)). Taking the LMF as an example, data exchanged between the UE and the LMF may be transparently transmitted by a base station.

The UE may be in various states, e.g., a Radio Resource Control (RRC) connected state, an RRC inactive state, and an RRC idle state. The UE has different capabilities in different states.

### SUMMARY

Embodiments of the disclosure provide methods and apparatuses for processing information, a communication device, and a storage medium.

According to a first aspect of embodiments of the disclosure, a method for processing information, performed by an access network device, is provided. The method includes:
obtaining a first indication from a User Equipment (UE), in which the first indication indicates whether the UE supports positioning in a Radio Resource Control (RRC) non-connected state.

According to a second aspect of embodiments of the disclosure, a method for processing information, performed by a User Equipment (UE), is provided. The method includes:
sending a first indication, in which the first indication indicates whether the UE supports positioning in a Radio Resource Control (RRC) non-connected state.

According to a third aspect of embodiments of the disclosure, a method for processing information, performed by a Location Management Function (LMF), is provided. The method includes:
sending a first indication to an access network device, in which the first indication indicates whether a User Equipment (UE) supports positioning in a Radio Resource Control (RRC) non-connected state.

According to a fourth aspect of embodiments of the disclosure, an apparatus for processing information is provided. The apparatus includes:
an obtaining module, configured to obtain a first indication from a User Equipment (UE), in which the first indication indicates whether the UE supports positioning in a Radio Resource Control (RRC) non-connected state.

According to a fifth aspect of embodiments of the disclosure, an apparatus for processing information is provided. The apparatus includes:
a second sending module, configured to send a first indication, in which the first indication indicates whether a User Equipment (UE) supports positioning in a Radio Resource Control (RRC) non-connected state.

According to a sixth aspect of embodiments of the disclosure, an apparatus for processing information is provided. The apparatus includes:
a third sending module, configured to send a first indication to an access network device, in which the first indication indicates information on whether a User Equipment (UE) supports positioning in a Radio Resource Control (RRC) non-connected state.

According to a seventh aspect of embodiments of the disclosure, a communication device is provided. The communication device includes a processor, a transceiver, a memory and an executable program stored on the memory and capable of running on the processor. When the executable program is executed by the processor, the method for processing information of any one of the first aspect, the second aspect and the third aspect is performed.

According to an eighth aspect of embodiments of the disclosure, a computer storage medium is provided. The computer storage medium has an executable program stored thereon. When the executable program is executed by a processor, the method for processing information of any one of the first aspect, the second aspect or the third aspect is performed.

With the technical solutions according to embodiments of the disclosure, the access network device obtains the first indication that indicates whether the UE supports positioning in the RRC non-connected state, and thus the access network device may perform a relevant configuration based on information on whether the UE supports positioning in the RRC non-connected state.

It is understandable that the foregoing general description and the following detailed descriptions are exemplary and explanatory only and do not limit embodiments of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of embodiments of the disclosure.
FIG. 1 is a schematic diagram illustrating a wireless communication system according to an exemplary embodiment.
FIG. 2 is a flowchart illustrating a method for processing information according to an exemplary embodiment.
FIG. 3 is a flowchart illustrating a method for processing information according to an exemplary embodiment.
FIG. 4 is a flowchart illustrating a method for processing information according to an exemplary embodiment.
FIG. 5 is a flowchart illustrating a method for processing information according to an exemplary embodiment.
FIG. 6 is a flowchart illustrating a method for processing information according to an exemplary embodiment.
FIG. 7 is a flowchart illustrating a method for processing information according to an exemplary embodiment.
FIG. 8 is a flowchart illustrating a method for processing information according to an exemplary embodiment.
FIG. 9 is a flowchart illustrating a method for processing information according to an exemplary embodiment.
FIG. 10 is a schematic diagram illustrating an apparatus for processing information according to an exemplary embodiment.
FIG. 11 is a schematic diagram illustrating an apparatus for processing according to an exemplary embodiment.
FIG. 12 is a schematic diagram illustrating an apparatus for processing information according to an exemplary embodiment.
FIG. 13 is a schematic diagram illustrating a User Equipment (UE) according to an exemplary embodiment.
FIG. 14 is a schematic diagram illustrating a communication device according to an exemplary embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit embodiments of the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein may be interpreted as "when", "while" or "in response to determining".

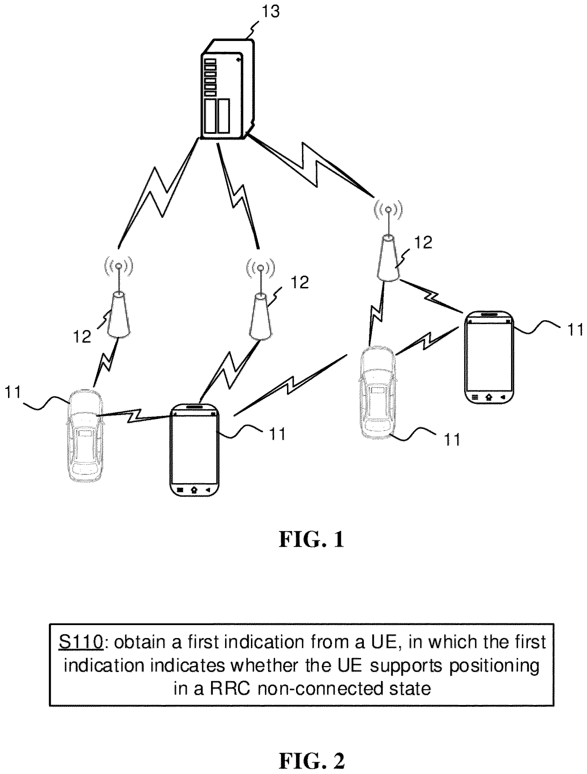

FIG. 1 is a schematic diagram illustrating a wireless communication system according to an embodiment. As illustrated in FIG. 1, the wireless communication system is a communication system based on cellular mobile communication technology. The wireless communication system may include: a plurality of user equipment (UEs) 11 and a plurality of access devices 12.

The UE 11 may be a device that provides voice and/or data connectivity to a user. The UE 11 may communicate with one or more core networks via a radio access network (RAN). The UE 11 may be an Internet of Things (IoT) UE, such as a sensor device, a cell phone (or "cellular" phone), and a computer with the IoT UE. Or, the UE 11 may be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, a user agent, a user device, or a UE. Or, the UE 11 may be an unmanned aerial vehicle device. Or, the UE 11 may be an in-vehicle device, for example, an electronic control unit having wireless communication function or a wireless communication device external to the electronic control unit. Or, the UE 11 may be a roadside device, for example, a street light, a signal light, or other roadside devices having a wireless communication function.

The access device 12 may be a network side device in the wireless communication system. The wireless communication system may be the 4th Generation (4G) mobile communication system, also known as Long Term Evolution (LTE) system. Or, the wireless communication system may also be a 5G system, also known as New Radio (NR) system or 5G NR system. Or, the wireless communication system may be any next generation system of the 5G system. The access network in the 5G system may be called New Generation-Radio Access Network (NG-RAN) or a machine type communication (MTC) system.

The access device 12 may be an evolved base station (eNB) employed in the 4G system. Or, the access device 12 may be an access device (gNB) with a centralized distributed architecture employed in the 5G system. When the access device 12 adopts a centralized-distributed architecture, the access device 12 usually includes a central unit (CU) and at least two distributed units (DUs). The CU is equipped with protocol stacks of a Packet Data Convergence Protocol (PDCP) layer, a Radio Link Control (RLC) layer, and a Media Access Control (MAC) layer. The DU is equipped with a protocol stack of a physical (PHY) layer, and the specific implementation of the access device 12 is not limited in embodiments of the disclosure.

A wireless connection is established between the access device 12 and the UE 11 via a radio interface. In different implementations, the radio interface is a radio interface based on the 4G standard. Or, the radio interface is a radio interface based on the 5G standard, such as a NR. Or, the radio interface may be a radio interface based on the standard of the next generation of 5G.

In some embodiments, End to End (E2E) connections are established between the UEs 11 in scenarios, such as, Vehicle to Vehicle (V2V) communication, Vehicle to Infrastructure (V2I) communication, and Vehicle to Pedestrian (V2P) communication in Vehicle to Everything (V2X) communication.

In some embodiments, the above wireless communication system may also include a network management device 13.

The plurality of access devices 12 are connected to the network management device 13 respectively. The network management device 13 may be a core network device in the wireless communication system. For example, the network management device 13 is a Mobility Management Entity (MME) in an Evolved Packet Core (EPC). Or, the network management device may be another core network device, such as a Serving GateWay (SGW), a Public Data Network GateWay (PGW), a Policy and Charging Rules Function (PCRF), or a Home Subscriber Server (HSS), etc. The implementation form of the network management device 13 is not limited in embodiments of the disclosure.

As illustrated in FIG. 2, embodiments of the disclosure provide a method for processing information, performed by an access network device. The method includes the following.

At step S110, a first indication from a UE is obtained, in which the first indication indicates whether the UE supports positioning in a Radio Resource Control (RRC) non-connected state.

The access network device may be various types of base stations. These base stations include, but are not limited to, an eNB or a gNB.

After receiving the first indication, the access network device may determine whether the UE supports positioning in the RRC non-connected state. The RRC non-connected state includes, but is not limited to, an RRC idle state and/or an RRC inactive state. For example, the first indication at least indicates a positioning capability of the UE in the RRC inactive state.

After being aware of whether the UE supports positioning in the RRC non-connected state, the access network device may adaptively perform positioning-related configurations and other processing for the UE that is in the RRC non-connected state.

The first indication may indicate a capability related to the positioning performed by the UE in the RRC non-connected state based on a mobile communication signal. For example, the first indication may indicate whether the UE in the RRC non-connected state may send an uplink positioning reference signal, whether the UE in the RRC non-connected state may receive a downlink positioning reference signal, or whether the UE in the RRC non-connected state may report positioning data related to the reception and transmission based on a positioning signal.

In an embodiment, the first indication n is determined by a Location Management Function (LMF) based on information on whether the UE supports positioning in the RRC non-connected state sent by the UE to the LMF and is sent by the LMF to an access network device (e.g., a base station).

In another embodiment, the first indication is sent by the UE to the LMF, and then sent by the LMF to the access network device (e.g., a base station).

In still another embodiment, the first indication is sent by the UE directly to the access network device.

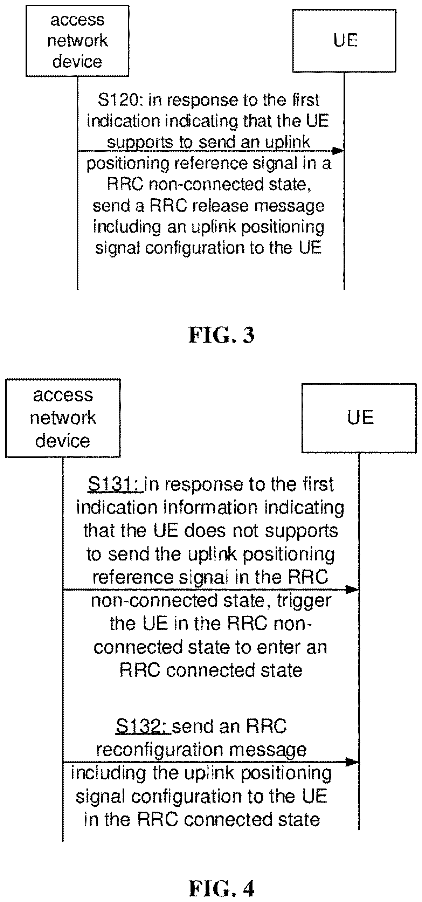

As illustrated in FIG. 3, embodiments of the disclosure provide a method for processing information, performed by an access network device. The method includes the following.

At step S120, in response to determining that the UE supports to send an uplink positioning reference signal in an RRC non-connected state, an RRC release message including an uplink positioning signal configuration is sent to the UE.

The uplink positioning reference signal configuration is configuration information for the UE to send the uplink positioning reference signal, which indicates, but is not limited to, at least one of the following:
a frequency domain resource for the UE to send the uplink positioning reference signal;
a time domain resource for the UE to send the uplink positioning reference signal; or
signaling parameters for the UE to send the uplink positioning reference signal, e.g., a signaling parameter for indicating which type of uplink positioning reference signal is sent. The above is only an example of the uplink positioning reference signal configuration, and the specific implementation is not limited to the above example.

For example, it may be determined, based on the first indication in preceding embodiments, that the UE supports to send the uplink positioning reference signal in the RRC non-connected state, or it may be determined by other means that the UE supports to send the uplink positioning reference signal in the RRC non-connected state. That is, in embodiments of the disclosure, the access network device may determine, based on the first indication sent by the UE, whether the UE supports positioning in the RRC non-connected state. That is, the step S120 may be performed together with the step S110. Certainly, the step S120 may also be executed independently, i.e., the access network device may determine, by any other means, whether the UE supports the positioning in the RRC non-connected state.

For example, when the UE enters the RRC non-connected state or the UE is currently in the RRC non-connected state, if the UE in the RRC non-connected state supports the positioning and the base station sends the uplink positioning signal configuration through an RRC release message, then the network (i.e., base station) sends the uplink positioning signal configuration to the UE without triggering the UE to enter an RRC connected state. In this way, unnecessary power consumption of the UE caused by switching, due to the reception of the uplink positioning signal configuration, from the RRC non-connected state to the RRC connected state may be reduced, which saves the power consumption of the UE, extends the standby time of the UE, and reduces the positioning delay.

As illustrated in FIG. 4, embodiments of the disclosure provide a method for processing information, performed by an access network device. The method includes the following.

At step S 131, in response to determining that the UE does not support to send the uplink positioning reference signal in the RRC non-connected state, the UE in the RRC non-connected state is instructed to enter an RRC connected state.

At step S132, an RRC reconfiguration message including the uplink positioning signal configuration is sent to the UE in the RRC connected state.

For example, if the UE does not support to send the uplink positioning reference signal in an RRC non-connected state, when the base station needs to send the uplink positioning reference signal configuration to the UE, the base station will send an indication to the UE, in which the indication triggers the UE to enter the RRC connected state. After the UE enters the RRC connected state, the base station sends the uplink positioning reference signal configuration to the UE in the RRC connected state.

In detail, the uplink positioning reference signal configuration may be carried in any message sent by the base station to the UE. For example, the uplink positioning reference signal configuration may be carried in an RRC reconfiguration message.

In some embodiments, the first indication indicates at least one of the following:
whether the UE supports to send the uplink positioning reference signal in the RRC non-connected state;
whether the UE supports to receive a positioning reference signal in the RRC non-connected state; or
whether the UE supports to use a Small Data Transmission (SDT) manner to send positioning data in the RRC non-connected state.

In some embodiments, indication contents of the first indication may be at least one of the above.

The uplink positioning reference signal includes, but is not limited to, a Sounding Reference Signal (SRS). The received Positioning Reference Signal (PRS).

If the UE in the RRC non-connected state sends the positioning data using the SDT manner, the UE may stay in the RRC non-connected state to send the positioning data to the network side. As an example, the positioning data sent through the SDT manner may be sent to the network side on uplink scheduling grant resources. As another example, the UE may send the positioning data to the network side in the SDT manner by carrying the positioning data in a random access request message A or a random access request message 3.

In some embodiments, obtaining the first indication from the UE includes:
receiving the first indication from a Location Management Function (LMF), in which the first indication is sent by the UE to the LMF, or the first indication is determined by the LMF based on a positioning capability of the UE and sent to the access network device;
   or,
receiving the first indication from the UE.

The first indication may come from the LMF. For example, after the LMF has known the positioning capability of the UE in the RRC non-connected state, the LMF may send the first indication to the base station to notify the access network device of the positioning capability of the UE in the RRC non-connected state. There are many ways for the LMF to know the positioning capability of the UE in the RRC non-connected state. For example, the LMF may receive, from the UE, positioning capability information for indicating the positioning capability of the UE in the RRC non-connected state or may determine the positioning capability of the UE in the RRC non-connected state by itself based on configuration data from the UE or device type of the UE. The configuration data may be obtained from a User Data Management (UDM).

In another embodiment, the first indication may come from the UE. For example, the UE may report the first indication to the base station when the UE is in an RRC connected state.

The first indication may be carried in any message from the LMF, e.g., a NR Positioning Protocol A (NRPPa) message.

In some embodiments, receiving the indication sent by the LMF includes:
receiving an NRPPa positioning information request message including the first indication from the LMF.

For example, the NRPPa positioning information request message is further used to instruct the access network device to provide the uplink positioning reference signal configuration of the UE to the LMF.

The NRPPa positioning information request message may be a message sent when instructing or requesting the access network device to provide the uplink positioning reference signal configuration of the UE. In this way, a new information element (IE) may be added to the NRPPa positioning information request message to carry the first indication, or remaining bits of the NRPPa positioning information request message may be used to carry the first indication.

In some embodiments, receiving the indication from the UE includes:
receiving a connection resume request message including the first indication.

For example, if the UE needs to send the first indication, the UE in the RRC non-connected state may send the first indication through the connection resume request message.

In embodiments of the disclosure, the access network device may determine, based on the first indication sent by the UE, whether the UE supports positioning in the RRC non-connected state. That is, the steps S131 and S 132 may be executed together with the step S 110. Certainly, the steps S131 and S132 may also be executed independently. That is, the access network device may determine, in any possible way, whether the UE supports positioning in the RRC non-connected state. The steps S131 and S132 may also be executed together with the step S120, or the steps S131 and S 132 may be executed together with the step S 110 and the step S120.

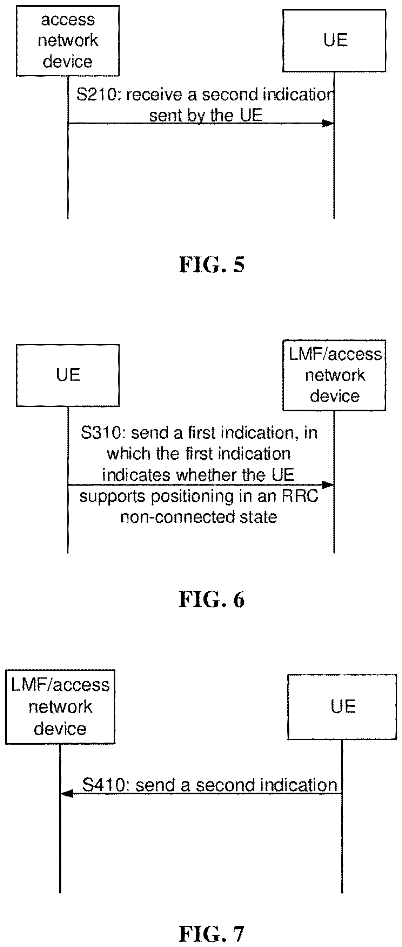

As illustrated in FIG. 5, embodiments of the disclosure provide a method for processing information, performed by an access network device. The method includes the following.

At step S210, a second indication sent by UE is received.

The second indication is used to indicate any positioning-related state of the UE.

In an embodiment, the UE may report only the second indication. In another embodiment, the UE may send both the first indication and the second indication to the access network device. If the UE needs to send both the first indication and the second indication to the access network device, the UE may simultaneously report both the first indication and the second indication to the access network device. Certainly, the UE may report the first indication and the second indication to the access network device separately.

In an embodiment, the first indication is determined by the LMF based on the positioning capability sent by the UE to the LMF and then sent to the access network device (e.g., the base station). In another embodiment, the first indication is sent by the UE to the LMF, and then sent by the LMF to the access network device (e.g., the base station). In still another embodiment, the first indication is sent by the UE directly to the access network device.

The second indication may be carried in any uplink message sent by the UE to the access network device. For example, the second indication may be carried in an RRC connection resume request message.

In some embodiments, when the UE sends an event report to the base station, the UE sends the second indication to the access network device. The event report may include, but is not limited to, positioning data. A receiver of the event report is the LMF, and a receiver of the second indication is the access network device (e.g., gNB). For example, the second indication indicates at least one of the following:
whether the UE has a positioning service to be executed or the UE is executing the positioning service;
whether the UE has positioning data to be sent; or
   whether the UE has positioning data to be received.

When the UE is executing the positioning service or the UE has a service to be executed, and/or the UE needs to report positioning data in the future, and/or the UE has positioning data to be received, the second indication may be used to indicate that the UE needs to stay in the RRC inactive state to complete the positioning service, rather than triggering the UE to enter an RRC idle state where the UE cannot execute the positioning service.

In some embodiments, the method further includes:
instructing the UE in the RRC non-connected state to enter an RRC idle state or to stay in the RRC non-connected state based on the second indication.

If the second indication indicates that the UE has no positioning service to be executed or the UE is not executing the positioning service, and/or the UE has no positioning data to be received, and/or the UE has no positioning data to be sent, the UE may enter an RRC idle state with lower power consumption, and the network-side device may instruct the UE to switch from the RRC inactive state to the RRC idle state.

When the second indication indicates that the UE has a positioning service to be executed, the UE is currently executing a positioning service, the UE has positioning data to be sent, or the UE has positioning data to be received, the UE needs to stay in the RRC inactive state, and the access network device may instruct the UE to stay in the RRC inactive state or not send any indication for changing state to the UE, and thus the UE may stay in the RRC inactive state by default.

For example, the access network device may send an indication to the UE, in which the indication instructs the UE to enter the RRC idle state or stay in the current RRC inactive state.

In some embodiments, instructing the UE to switch from the RRC non-connected state to the RRC idle state or to stay in the RRC non-connected state based on the second indication includes at least one of the following:
in response to the indication indicating that the UE has a positioning service to be executed or the UE is executing a positioning service currently, instructing the UE in the RRC non-connected state to stay in the RRC non-connected state;
in response to the indication indicating that the UE has data to be sent, instructing the UE in the RRC non-connected state to stay in the RRC non-connected state;
in response to the indication indicating that the UE has data to be received, instructing the UE in the RRC non-connected state to stay in the RRC non-connected state;
in response to the indication indicating that the UE has no positioning service to be executed or the UE is not executing a positioning service, instructing the UE in the RRC non-connected state to enter the RRC idle state;
in response to the indication indicating that the UE has no data to be sent, instructing the UE in the RRC non-connected state to enter the RRC idle state; or
in response to the indication indicating that the UE has no data to be received, instructing the UE in the RRC non-connected state to enter the RRC idle state.

In this way, the access network device may indicate whether the UE should continue to stay in the RRC non-connected state based on the received second indication, rather than triggering the UE to enter a state suitable for the current UE. On the one hand, this ensures the smooth execution of the positioning service, and on the other hand, this reduces the power consumption of the UE as much as possible and extends the standby time of the UE.

As illustrated in FIG. 6, embodiments of the disclosure provide a method for processing information, performed by a UE. The method includes the following.

At step S310, first indication is sent, in which the first indication indicates whether the UE supports positioning in an RRC non-connected state.

The first indication indicates the positioning capability of the UE in the RRC non-connected state. For example, the first indication is at least used to indicate the positioning capability of the UE in an RRC inactive state.

Embodiments of the disclosure provide a method for processing information, performed by a UE. The method includes:
sending positioning capability information of the UE to a LMF, in which the positioning capability information is used for the LMF in generating the first indication to be sent to an access network device.

The positioning capability information at least indicates the positioning capability of the UE in the RRC non-connected state.

Sending the first indication includes:
sending the first indication to a LMF;
   or,
sending the first indication to an access network device.

In an embodiment, the first indication is determined by the LMF based on the positioning capability sent by the UE to the LMF and then sent by the LMF to the access network device (e.g., the base station). In another embodiment, the first indication is sent by the UE to the LMF, and then sent by the LMF to the access network device (e.g., the base station). In still another embodiment, the first indication is sent by the UE directly to the access network device.

In conclusion, the first indication indicates the positioning capability of the UE in the RRC non-connected state, to facilitate the access network device to perform a corresponding operation after receiving the first indication.

In some embodiments, sending the first indication to the LMF includes:
sending a LTE Positioning Protocol (LPP) message including the first indication to the LMF.

For example, the UE carries the first indication via the LPP message, so that the LMF may receive the first indication based on a LPP protocol.

In some embodiments, the method further includes:
receiving an LPP request message sent by the LMF.

Sending the LPP message including the indication to the LMF includes:
based on the LPP request message, sending an LPP Provide Capability message including the first indication to the LMF.

For example, the LMF sends the LPP request message to the UE to instruct the UE to provide information, such as the positioning capability. After receiving the LPP request message, the UE may send the LPP Provide Capability message to the UE based on the LPP request message. Since the LPP Provide Capability message contains the first indication, the LMF, after receiving the LPP Provide Capability message, knows the positioning capability of the UE in the RRC non-connected state.

In some embodiments, sending the first indication to the access network device includes:
sending a connection resume message including the first indication to the access network device.

If the UE sends the first indication directly to the access network device, the UE may send the connection resume message to the access network device to realize reporting of the first indication.

In some embodiments, the first indication is used to indicate at least one of the following:
whether the UE supports to send an uplink positioning reference signal in the RRC non-connected state;
whether the UE supports to receive a positioning reference signal in the RRC non-connected state; or
whether the UE supports to use an SDT manner to send positioning data in the RRC non-connected state.

As illustrated in FIG. 7, embodiments of the disclosure provide a method for processing information, performed by a UE. The method includes the following.

At step S410, a second indication is sent, in which the second indication indicates current positioning-related state information of the UE.

For example, the UE sends the second indication to the LMF or the access network device. If the UE sends the second indication to the LMF, the LMF may transfer the second indication to the access network device.

For example, the second indication indicates at least one of the following:
whether the UE has a positioning service to be executed or whether the UE is executing a positioning service currently;
whether the UE has positioning data to be sent; or
whether the UE has data to be received.

In some embodiments, the step S410 may be executed together with the step S310 or the step S410 may be executed independently.

If the UE needs to send both the second indication and the first indication to the base station, the first indication and the second indication may be carried in the same message and sent to the access network device to reduce a number of times that the UE sends the message. For example, the UE may send the connection resume message including both the first indication and the second indication to the access network device.

As described above, in an embodiment, the first indication is determined by the LMF based on the positioning capability of the UE and sent by the LMF to the access network device (e.g., the base station).

In another embodiment, the first indication is sent by the UE to the LMF, and then sent by the LMF to the access network device (e.g., the base station).

In still another embodiment, the first indication is sent by the UE directly to the access network device.

In some embodiments, the method further includes the following.

At step S420, a returned indication is received, in which the indication instructs the UE to enter an RRC idle state or stay in the RRC non-connected state.

In some possible implementations, the returned indication is sent based on the second indication.

For example, the indication may be used to indicate at least one of the following:
in response to the indication indicating that the UE has a positioning service to be executed or the UE is executing a positioning service currently, instructing the UE in the RRC non-connected state to stay in the RRC non-connected state;
in response to the indication indicating that the UE has data to be sent, instructing the UE in the RRC non-connected state to stay in the RRC non-connected state;
in response to the indication indicating that the UE has data to be received, instructing the UE in the RRC non-connected state to stay in the RRC non-connected state;
in response to the indication indicating that the UE has no positioning service to be executed or the UE is not executing a positioning service currently, instructing the UE in the RRC non-connected state to enter the RRC idle state;
in response to the indication indicating that the UE has no data to be sent, instructing the UE in the RRC non-connected state to enter the RRC idle state; or
in response to the indication indicating that the UE has no data to be received, instructing the UE in the RRC non-connected state to enter the RRC idle state.

In some embodiments, the method further includes:
receiving an RRC release message including an uplink positioning signal configuration, in which the uplink positioning signal configuration is provided by an access network device after the access network device determines that the UE supports to send an uplink positioning reference signal in the RRC non-connected state.

If the first indication indicates that the UE supports the positioning in an RRC non-connected state or at least in an RRC inactive state, the UE may receive the uplink positioning signal configuration. For example, the UE in the RRC non-connected state may receive the RRC release message carrying the uplink positioning signal configuration.

For example, the uplink positioning signal configuration may at least be used for the UE to send the uplink positioning reference signal in the RRC inactive state.

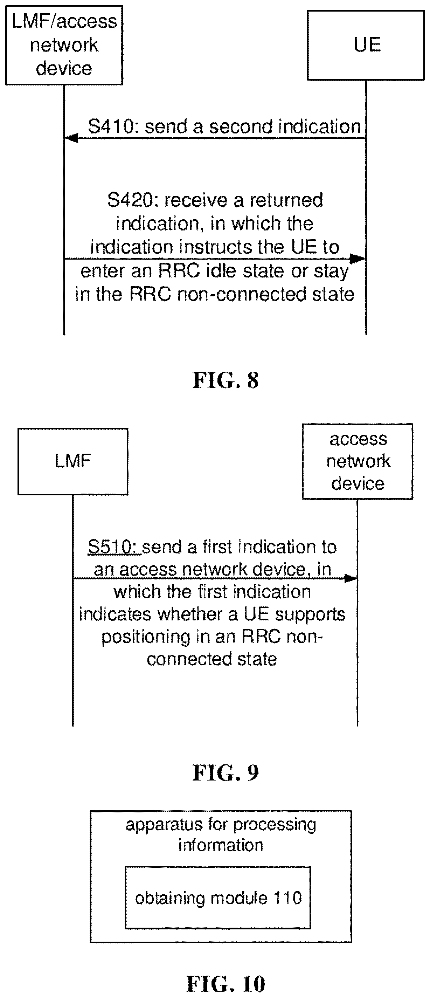

As illustrated in FIG. 8, embodiments of the disclosure provide a method for processing information, performed by a LMF. The method includes the following.

At step S510, a first indication is sent to an access network device, in which the first indication indicates whether a UE supports positioning in an RRC non-connected state.

In some embodiments, the first indication is received by the LMF from the UE, or the first indication is generated by the LMF based on the positioning capability of the UE. In detail, the first indication may be generated by the LMF based on positioning capability information for indicating the UE's own positioning capability sent by the UE.

After the first indication is sent to the access network device, the access network device may know whether the UE supports the positioning in the RRC non-connected state. In other words, the access network device may know the positioning capability of the UE in the RRC non-connected state.

In some embodiments, sending the first indication to the access network device includes:
sending an NRPPa positioning information request message including the first indication to the access network device.

The NRPPa positioning information request message is used to instruct the access network device to provide an uplink positioning reference signal configuration of the UE to the LMF. In this way, the NRPPa positioning information request message not only instructs the access network device to provide the uplink positioning reference signal configuration of the UE, but also notifies the access network device of the positioning capability of the UE in the RRC non-connected state.

In this way, if the access network device did not know the positioning capability of the UE in the RRC non-connected state previously, after the access network device receives the NRPPa positioning information request message, the access network device may know that the UE supports the positioning in the RRC non-connected state, and then the access network device may configure the uplink positioning reference signal for the UE and send the uplink positioning reference signal configuration to the LMF.

In some embodiments, the NRPPa positioning information request message is further used to instruct the access network device to provide the uplink positioning reference signal configuration of the UE to the LMF.

In some embodiments, the first indication is used to indicate at least one of the following:
whether the UE supports to send an uplink positioning reference signal in the RRC non-connected state;
whether the UE supports to receive a physical reference signal in the RRC non-connected state; or
whether the UE supports to use an SDT manner to send positioning data in the RRC non-connected state.

In some embodiments, the method further includes:
receiving the first indication sent by the UE.

For example, the first indication is received from the UE before sending the first indication to the access network device.

For example, the method further includes:
sending an LPP request message to the UE.

Sending the LPP message including the indication to the LMF includes:
based on the LPP request message, returning an LPP Provide Capability message including the first indication.

For example, the LPP messages based on an LPP protocol are exchanged between the UE and the LMF. For example, the UE is instructed by the LPP request message to upload the first indication.

In an embodiment, the method further includes: determining the first indication based on the positioning capability of the UE. For example, the LMF receives the positioning capability information from the UE, and then the LMF generates the first indication by itself based on the positioning capability of the UE indicated by the positioning capability information. Certainly, the LMF may also obtain the positioning capability information that indicates the positioning capability of the UE from other network elements, such as a user database, which is not limited to receiving from the UE.

Embodiments of the disclosure provide a method for positioning a UE in an RRC inactive state. The method includes at least one of the following:
sending, by a LMF to a base station, indication indicating that a UE supports positioning in an RRC inactive state; or
sending indication by a UE to a base station when using the SDT to send positioning data.

The UE supporting the positioning in the RRC inactive state includes one of the following:
the UE may send a SRS in the RRC inactive state;
the UE may measure a PRS in the RRC inactive state; or
the UE may use the SDT to send positioning data in the RRC inactive state.

The LMF notifies a base station of the positioning capability through the following message. For example, the LMF notifies, through an NRPPa message, the base station of the positioning capability of the UE in the RRC inactive state.

For example, an NRPPa positioning information request message is used for the LMF to notify the base station of the positioning capability. That is, the LMF may indicate the positioning capability when the LMF requests the uplink positioning reference signal configuration of the UE from the gNB. Or, a new NRPPa positioning message is defined for the LMF to notify the base station of the positioning capability, in which the new NRPPa positioning message may be used to carry the indication indicating the positioning capability of the UE in the RRC inactive state.

The LMF requests, through an LPP message, the indication indicating the positioning capability from the UE.

After the gNB receives the NRPPa message, if the UE may send a SRS in the RRC inactive state, the gNB configures the uplink positioning reference signal configuration for the UE through an RRC release message.

If the UE cannot send a SRS in the RRC inactive state, after the gNB triggers the UE to enter the RRC connected state, the gNB sends the uplink positioning reference signal configuration to the UE through an RRC reconfiguration message.

The UE may provide the indication for indicating the current positioning-related state of the UE to the access network device. For example, the indication may indicate one of the following:
the UE being performing a positioning service;
there being subsequent data to be received; or
there being subsequent data to be sent.

The subsequent data mentioned herein includes, but is not limited to, positioning data.

The indication indicating the current positioning-related state of the UE may be carried by an RRC resume request.

In some embodiments, the indication indicating the current positioning-related state of the UE may also be carried by other messages, e.g., a customized new message.

For example, a location service indication message is defined to send the indication indicating the current positioning-related state of the UE.

If the UE is performing a positioning service or has subsequent data to be sent, the base station will not trigger the UE to enter the RRC idle state, or the base station will require the UE to stay in the RRC idle state.

As illustrated in FIG. 10, embodiments of the disclosure provide an apparatus for processing information. The apparatus includes: an obtaining module 110.

The obtaining module 110 is configured to obtain a first indication from a UE, in which the first indication indicates whether the UE supports positioning in an RRC non-connected state.

The information processing apparatus may be included in the UE.

In some embodiments, the obtaining module 110 may be a program module. When the program module is executed by a processor, the above operations may be implemented.

In some embodiments, the obtaining module 110 may be a hardware and software combination module, which includes, but is not limited to, various programmable arrays. The programmable arrays include, but are not limited to, field programmable arrays and/or complex programmable arrays.

In other embodiments, the obtaining module 110 may be a pure hardware module, which includes, but is not limited to, application specific integrated circuit.

In some embodiments, the apparatus further includes a first sending module.

The first sending module is configured to, in response to the first indication indicating that the UE supports to send an uplink positioning reference signal in the RRC non-connected state, send an RRC release message including an uplink positioning signal configuration to the UE.

In some embodiments, the apparatus further includes a triggering module.

The triggering module is configured to, in response to the first indication indicating that the UE does not support to send the uplink positioning reference signal in the RRC non-connected state, trigger the UE in the RRC non-connected state to enter an RRC connected state and to send an RRC reconfiguration message including the uplink positioning signal configuration to the UE in the RRC connected state.

In some embodiments, the first indication is used to indicate at least one of the following:
whether the UE supports to send an uplink positioning reference signal in the RRC non-connected state;
whether the UE supports to receive a positioning reference signal in the RRC non-connected state; or
whether the UE supports to use an SDT manner to send positioning data in the RRC non-connected state.

In some embodiments, the obtaining module 110 is configured to: receive the first indication from a LMF or receive the first indication from the UE.

In some embodiments, the obtaining module 110 is configured to receive an NRPPa positioning information request message including the first indication from the LMF.

In some embodiments, the NRPPa positioning information request message is further used to instruct the access network device to provide an uplink positioning reference signal configuration of the UE to the LMF.

In some embodiments, the obtaining module 110 is configured to receive a connection resume request message including the first indication.

In some embodiments, the apparatus further includes a first receiving module.

The first receiving module is configured to receive a second indication sent by the UE, in which the second indication indicates at least one of the following:
whether the UE has a positioning service to be executed or whether the UE is executing a positioning service currently;
whether the UE has positioning data to be sent; or
whether the UE has positioning data to be received.

In some embodiments, the apparatus further includes an indicating module.

The indicating module is configured to instruct, based on the second indication, the UE in the RRC non-connected state to enter an RRC idle state or to stay in the RRC non-connected state.

In some embodiments, the indicating module is configured to perform at least one of the following:
in response to the indication indicating that the UE has a positioning service to be executed or the UE is executing a positioning service currently, instructing the UE in the RRC non-connected state to stay in the RRC non-connected state;
in response to the indication indicating that the UE has data to be sent, instructing the UE in the RRC non-connected state to stay in the RRC non-connected state;
in response to the indication indicating that the UE has data to be received, instructing the UE in the RRC non-connected state to stay in the RRC non-connected state;
in response to the indication indicating that the UE has no positioning service to be executed or the UE is not executing a positioning service currently, instructing the UE in the RRC non-connected state to enter the RRC idle state;
in response to the indication indicating that the UE has no data to be sent, instructing the UE in the RRC non-connected state to enter the RRC idle state; or
in response to the indication indicating that the UE has no data to be received, instructing the UE in the RRC non-connected state to enter the RRC idle state.

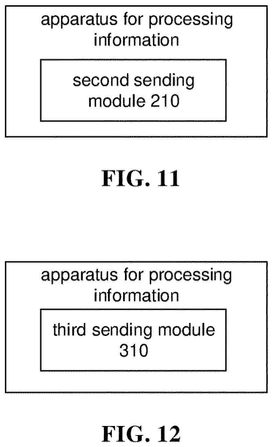

As illustrated in FIG. 11, embodiments of the disclosure provide an apparatus for processing information. The apparatus includes: a second sending module 210.

The second sending module 210 is configured to send a first indication, in which the first indication indicates whether the UE supports positioning in an RRC non-connected state.

The information processing apparatus may be included in a LMF.

In some embodiments, the second sending module 210 may be a program module. When the program module is executed by a processor, the above operations can be implemented.

In some embodiments, the second sending module 210 may be a hardware and software combination module, which includes, but is not limited to, various programmable arrays. The programmable arrays include, but are not limited to, field programmable arrays and/or complex programmable arrays.

In other embodiments, the second sending module 210 may be a pure hardware module, which includes, but is not limited to, application specific integrated circuits.

In some embodiments, the second sending module 210 is configured to send the first indication to a LMF or send the first indication to an access network device.

In some embodiments, the second sending module 210 is configured to send an LPP message including the first indication to the LMF.

In some embodiments, the apparatus further includes a second receiving module.

The second receiving module is configured to receive an LPP request message sent by the LMF.

The second sending module 210 is configured to send, based on the LPP request message, an LPP Provide Capability message including the first indication to the LMF.

In some embodiments, the second sending module 210 is configured to send a connection resume message including the first indication to the access network device.

In some embodiments, the first indication is used to indicate at least one of the following:
whether the UE supports to send an uplink positioning reference signal in the RRC non-connected state;
whether the UE supports to receive a positioning reference signal in the RRC non-connected state; or
whether the UE supports to use an SDT manner to send positioning data in the RRC non-connected state.

In some embodiments, the second sending module 210 is configured to send second indication to the access network device, in which the second indication indicates at least one of the following:
whether the UE has a positioning service to be executed or whether the UE is executing a positioning service currently;
whether the UE has positioning data to be sent; or
whether the UE has data to be received.

In some embodiments, the apparatus further includes a returning module.

The returning module is configured to receive a returned indication, in which the indication instructs the UE to enter an RRC idle state or stay in the RRC non-connected state. In some possible implementations, the returned indication is sent based on the second indication.

As illustrated in FIG. 12, embodiments of the disclosure provide an apparatus for processing information. The apparatus includes a third sending module 310.

The third sending module 310 is configured to send first indication to an access network device, in which the first indication indicates whether a UE supports positioning in an RRC non-connected state.

The apparatus for processing information may be included in an access network device.

In some embodiments, the third sending module 310 may be a program module. When the program module is executed by a processor, the above operations may be implemented.

In some embodiments, the third sending module 310 may be a hardware and software combination module, which includes, but is not limited to, various programmable arrays. The programmable arrays include, but are not limited to, field programmable arrays and/or complex programmable arrays.

In other embodiments, the third sending module 310 may be a pure hardware module, which includes, but is not limited to, application specific integrated circuits.

In some embodiments, the third sending module 310 is configured to send an NRPPa positioning information request message including the indication to the access network device.

In some embodiments, the NRPPa positioning information request message is further used to instruct the access network device to provide an uplink positioning reference signal configuration of the UE to the LMF.

In some embodiments, the first indication is used to indicate at least one of the following:
whether the UE supports to send an uplink positioning reference signal in the RRC non-connected state;
whether the UE supports to receive a physical reference signal in the RRC non-connected state; or
whether the UE supports to use an SDT manner to send positioning data in the RRC non-connected state.

In some embodiments, the apparatus further includes a third receiving module.

The third receiving module is configured to receive the first indication sent by the UE.

In some embodiments, the third sending module 310 is configured to send an LPP request message to the UE.

The third sending module 310 is configured to return, based on the LPP request message, an LPP Provide Capability message including the first indication.

In some embodiments, the apparatus further includes a generating module.

The generating module is configured to determine the first indication based on the positioning capability of the UE.

For example, the third receiving module is further configured to receive positioning capability information sent by the UE. The first indication is generated based on the positioning capability information.

Embodiments of the disclosure provide a communication device. The communication device includes:
a memory for storing processor executable instructions; and
a processor connected to the memory.

The processor is configured to perform the above methods for processing information according to any of the preceding technical solutions.

The processor may include various types of storage mediums that are non-transitory computer storage mediums capable of continuing to memorize information stored thereon after the communication device is powered down.

The communication device includes: an access device, a UE, or a core network device.

The processor may be connected to the memory via a bus, etc., for reading an executable program stored on the memory, e.g., at least one of the methods as illustrated in FIGS. 2 to 9.

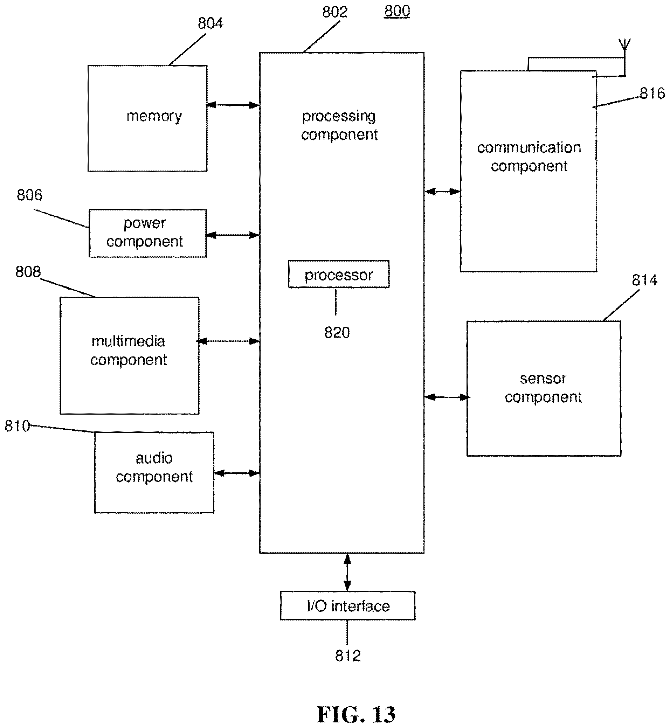

FIG. 13 is a block diagram illustrating a UE 800 according to an embodiment. For example, the UE 800 may be a mobile phone, a computer, a digital broadcasting UE, a message transceiver device, a game console, a tablet device, a medical device, a fitness device or a personal digital assistant.

As illustrated in FIG. 13, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to perform all or part of the steps in the above described methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as Wi-Fi, 2G or 3G, or a combination thereof. In an embodiment, the communication component 816 receives a broadcast signal or broadcast associated information from an external broadcast management system via a broadcast channel. In an embodiment, the communication component 816 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In some embodiments, the UE 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In some embodiments, there is also provided a non-transitory computer readable storage medium including executable instructions, such as the memory 804, executable by the processor 820 in the UE 800, for performing the above methods. For example, the non-transitory computer-readable storage medium may be a ROM, a Random Access Memory (RAM), a CD-ROM, a magnetic tape, a floppy disc, and an optical data storage device.

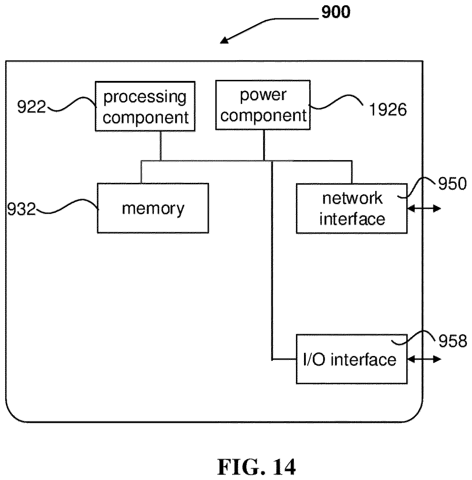

As illustrated in FIG. 14, embodiments of the disclosure illustrate an architecture of an access device. For example, a communication device 900 may be provided as a network side device. The communication device may be an access device and/or a core network device as previously described.

As illustrated in FIG. 14, the communication device 900 includes a processing component 922 consisting of one or more processors, and memory resources represented by a memory 932 for storing instructions that may be executed by the processing component 922, such as applications. The application programs stored in the memory 932 may include one or more modules each corresponding to a set of instructions. In addition, the processing component 922 is configured to execute the instructions to perform any of the methods described above that are applicable to the access device, for example, the methods illustrated in FIGS. 2 to 9.

The communication device 900 may also include a power component 926 configured to perform power management of the communication device 900, a wired or wireless network interface 950 configured to connect the communication device 900 to a network, and an input-output (I/O) interface 958. The communication device 900 may operate based on an operating system stored in the memory 932, such as Windows Server TM, Mac OS XTM, UnixTM, LinuxTM, FreeBSDTM, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for processing information, performed by an access network device, comprising:
obtaining a first indication from a User Equipment (UE), wherein the first indication indicates whether the UE supports positioning in a Radio Resource Control (RRC) non-connected state.

2. The method of claim 1, further comprising:
in response to the first indication indicating that the UE supports to send an uplink positioning reference signal in the RRC non-connected state, sending a RRC release message containing an uplink positioning signal configuration to the UE.

3. The method of claim 1 or 2, further comprising:
in response to the first indication indicating that the UE does not support to send an uplink positioning reference signal in the RRC non-connected state, triggering the UE in the RRC non-connected state to enter an RRC connected state, and sending an RRC reconfiguration message containing an uplink positioning signal configuration to the UE in the RRC connected state.

4. The method of any one of claims 1 to 3, wherein the first indication is used to indicate at least one of:
whether the UE supports to send an uplink positioning reference signal in the RRC non-connected state;
whether the UE supports to receive a positioning reference signal in the RRC non-connected state; or
whether the UE supports to use a Small Data Transmission (SDT) to send positioning data in the RRC non-connected state.

5. The method of any one of claims 1 to 4, wherein obtaining the first indication from the UE comprises:
receiving the first indication sent by a Location Management Function (LMF), wherein the first indication is sent by the UE to the LMF, or the first indication is determined by the LMF based on a positioning capability of the UE and sent to the access network device;
or
receiving the first indication from the UE.

6. The method of claim 5, wherein receiving the indication sent by the LMF comprises:
receiving a New Radio Positioning Protocol A (NRPPa) positioning information request message containing the first indication from the LMF.

7. The method of claim 6, wherein the NRPPa positioning information request message is further used to instruct the access network device to provide an uplink positioning reference signal configuration of the UE to the LMF.

8. The method of claim 5, wherein receiving the indication from the UE comprises:
receiving a connection resume request message containing the first indication.

9. The method of any one of claims 1 to 8, further comprising:
receiving a second indication from the UE, wherein the second indication indicates at least one of:
whether the UE has a positioning service to be executed or whether the UE is executing a positioning service currently;
whether the UE has positioning data to be sent; or
whether the UE has positioning data to be received.

10. The method of claim 9, further comprising:
instructing, based on the second indication, the UE in the RRC non-connected state to enter an RRC idle state or to stay in the RRC non-connected state.

11. The method of claim 10, wherein instructing, based on the second indication, the UE in the RRC non-connected state to enter the RRC idle state or to stay in the RRC non-connected state comprises at least one of:
in response to the indication indicating that the UE has a positioning service to be executed or the UE is executing a positioning service currently, instructing the UE in the RRC non-connected state to stay in the RRC non-connected state;
in response to the indication indicating that the UE has data to be sent, instructing the UE in the RRC non-connected state to stay in the RRC non-connected state;
in response to the indication indicating that the UE has data to be received, instructing the UE in the RRC non-connected state to stay in the RRC non-connected state;
in response to the indication indicating that the UE has no positioning service to be executed or the UE is not executing a positioning service currently, instructing the UE in the RRC non-connected state to enter the RRC idle state;
in response to the indication indicating that the UE has no data to be sent, instructing the UE in the RRC non-connected state to enter the RRC idle state; or
in response to the indication indicating that the UE has no data to be received, instructing the UE in the RRC non-connected state to enter the RRC idle state.

12. A method for processing information, performed by a User Equipment (UE), comprising:
sending a first indication, wherein the first indication indicates whether the UE supports positioning in a Radio Resource Control (RRC) non-connected state.

13. The method of claim 12, wherein sending the first indication comprises:
sending the first indication to a Location Management Function (LMF);
or,
sending the first indication to an access network device.

14. The method of claim 13, wherein sending the first indication to the LMF comprises:
sending a Long Term Evolution Positioning Protocol (LPP) message containing the first indication to the LMF.

15. The method of claim 14, further comprising:
receiving an LPP request message sent by the LMF;
wherein sending the LPP message containing the indication to the LMF comprises:
sending, based on the LPP request message, an LPP Provide Capability message containing the first indication to the LMF.

16. The method of claim 13, wherein sending the first indication to the access network device comprises:
sending a connection resume message containing the first indication to the access network device.

17. The method of any one of claims 12 to 16, wherein the first indication is used to indicate at least one of:
whether the UE supports to send an uplink positioning reference signal in the RRC non-connected state;
whether the UE supports to receive a positioning reference signal in the RRC non-connected state; or
whether the UE supports to use a Small Data Transmission (SDT) manner to send positioning data in the RRC non-connected state.

18. The method of any one of claims 12 to 17, further comprising:
sending a second indication to an access network device, wherein the second indication indicates at least one of:
whether the UE has a positioning service to be executed or whether the UE is executing a positioning service currently;
whether the UE has positioning data to be sent; or
whether the UE has data to be received.

19. The method of claim 18, further comprising: receiving an indication returned based on the second indication, wherein the indication instructs the UE to enter an RRC idle state or stay in the RRC non-connected state.

20. A method for processing information, performed by a Location Management Function (LMF), comprising:
sending a first indication to an access network device, wherein the first indication indicates whether a User Equipment (UE) supports positioning in a Radio Resource Control (RRC) non-connected state.

21. The method of claim 20, wherein sending the first indication to the access network device comprises:
sending a New Radio Positioning Protocol A (NRPPa) positioning information request message containing the indication to the access network device.

22. The method of claim 21, wherein the NRPPa positioning information request message is further used to instruct the access network device to provide an uplink positioning reference signal configuration of the UE to the LMF.

23. The method of any one of claims 20 to 22, wherein the first indication is used to indicate at least one of:
whether the UE supports to send an uplink positioning reference signal in the RRC non-connected state;
whether the UE supports to receive a physical reference signal in the RRC non-connected state; or
whether the UE supports to use a Small Data Transmission (SDT) to send positioning data in the RRC non-connected state.

24. The method of any one of claims 20 to 23, further comprising:
receiving the first indication sent by the UE.

25. The method of claim 24, further comprising:
sending a Long Term Evolution Positioning Protocol (LPP) request message to the UE;
wherein sending an LPP message containing the indication to the LMF comprises:
returning, based on the LPP request message, an LPP Provide Capability message containing the first indication.

26. The method of any one of claims 20 to 25, further comprising:
determining the first indication based on a positioning capability of the UE.

27. An apparatus for processing information, comprising:
an obtaining module, configured to obtain a first indication from a User Equipment (UE), wherein the first indication indicates whether the UE supports positioning in a Radio Resource Control (RRC) non-connected state.

28. An apparatus for processing information, comprising:
a second sending module, configured to send a first indication, wherein the first indication indicates information on whether a User Equipment (UE) supports positioning in a Radio Resource Control (RRC) non-connected state.

29. An apparatus for processing information, comprising:
a third sending module, configured to send a first indication to an access network device, wherein the first indication indicates information on whether a User Equipment (UE) supports positioning in a Radio Resource Control (RRC) non-connected state.

30. A communication device, comprising a processor, a transceiver, a memory and an executable program stored on the memory and capable of running on the processor, wherein when the executable program is executed by the processor, the method of any one of claims 1 to 11, the method of any one of claims 12 to 19, or the method of any one of claims 20 to 26 is performed.

31. A computer storage medium, having an executable program stored thereon, wherein when the executable program is executed by a processor, the method of any one of claims 1 to 11, the method of any one of claims 12 to 19, or the method of any one of claims 20 to 26 is performed.
